# NEUE EUROPÄISCHE PATENTSCHRIFT

(11) **EP 2 669 592 B2**
(45) Veröffentlichungstag und Bekanntmachung des Hinweises auf die Entscheidung über den Einspruch: **23.01.2019**
(45) Hinweis auf die Patenterteilung: 06.01.2016
(21) Anmeldenummer: 12182807.3
(22) Anmeldetag: 03.09.2012
(51) Int. Cl.: F24F 13/14, B60H 1/00, G01F 1/26, G01F 1/36, G05D 7/06, F24F 11/00, G01F 7/00, G01F 1/40, F24F 110/40, F24F 11/74

(54) **Klappe zur Anordnung in einem Strömungskanal einer klimatechnischen Anlage**
Valve for assembly in a flow channel of an air conditioning assembly
Volet pour agencement dans un canal d'écoulement d'une installation de climatisation

(30) Priorität: 31.05.2012 EP 12170196
(43) Veröffentlichungstag der Anmeldung: 04.12.2013
(73) Patentinhaber: TROX GmbH, 47506 Neukirchen-Vluyn (DE)
(72) Erfinder: Schicks, Heike, 47802 Krefeld (DE); Sadkowski, Manfred, 47608 Geldern (DE)
(74) Vertreter: Dr. Stark & Partner Patentanwälte mbB

(56) Entgegenhaltungen:
- WO-A1-01/75374
- DE-A1- 10 207 621
- DE-B3-102007 019 231
- DE-U1- 20 217 571

## Beschreibung

Die Erfindung betrifft eine Klappe zur Anordnung in einem Strömungskanal einer klimatechnischen Anlage, wobei die Klappe zwei Klappenflächen aufweist und drehbar um eine Schwenkachse gelagert ist und wobei eine Vorrichtung mit zwei Messstellen zur Bestimmung des Volumenstroms eines gasförmigen, in dem Strömungskanal strömenden Mediums vorgesehen ist.

Entsprechende Klappen werden beispielsweise in Volumenstromreglern, die beispielsweise mechanisch selbsttätig arbeitend sind oder die eine regelungstechnische Einheit bestehend aus Transmitter, Antrieb und Regeleinrichtung aufweisen, eingesetzt. Der Volumenstrom wird dabei üblicherweise über separate Stauelemente bestimmt. An diesen Stauelementen wird eine statische, dynamische oder totale Druckdifferenz abgegriffen, die eine möglichst gute Proportionalität zum Volumenstrom aufweisen sollen. Allgemein besteht jedoch das Problem, dass bei kleinen Volumenströmen eine hohe prozentuale Messungenauigkeit entsteht. Dies ist in erster Linie darin begründet, dass zwischen Vₘₐₓ und Vₘᵢₙ an den Stauelementen eine hohe Spreizung des Differenzdruckes besteht und die Genauigkeit der Messgeräte oft durch den maximalen Wert bestimmt wird.

WO 01/75374 offenbart eine Klappe nach dem Oberbegriff des Anspruchs 1.

Aufgabe der Erfindung ist es, eine Klappe, beispielsweise für einen Volumenstromregler, anzugeben, die auch bei sehr geringen Volumenströmen einen hohe Differenzdruck bestimmen lässt und damit eine hinreichende Regelgenauigkeit ermöglicht.

Diese Aufgabe wird dadurch gelöst, durch die Merkmale von Anspruch 1.

Die beiden Hohlkammern können ein gleiches Volumen aufweisen. Es ist aber auch durchaus möglich, dass die Hohlkammer der einen Klappenfläche größer als die Hohlkammer der anderen Klappenfläche ist.

Die Mittelung des Differenzdruckes kann je nach Winkelstellung der Klappe über den gesamten Querschnitt des Strömungskanals erfolgen. Je nach Winkelstellung der Klappe entsteht ein entsprechender Differenzdruck. Aufgrund der erfindungsgemäßen Ausgestaltung werden auch bei großen Drosselpositionen und somit auch bei geringen Kanalgeschwindigkeiten an der Klappe hohe Signale gemessen, die für den Transmitter gut auszuwerten sind. Aufgrund der erfindungsgemäßen Ausgestaltung werden auch bei geringen Drosselpositionen, d. h. bei hohen Kanalgeschwindigkeiten, gute Wirkdrucksignale erzeugt.

Jede Messstelle ist üblicherweise über eine Druckleitung mit einem Transmitter verbunden. Der Transmitter ist mit einer Regeleinrichtung und einem Antrieb verbunden.

Der Querschnitt des Strömungskanals kann beliebig ausgestaltet sein. Er kann beispielsweise rund oder eckig sein. Je nach Anordnung der Ausnehmung(en) findet die Druckentnahme über die gesamte Oberfläche der Hohlkammer oder nur über eine Teilfläche statt. Die Oberflächen können beispielsweise gelocht, geschlitzt oder perforiert ausgebildet sein. Vorzugsweise sind die Ausnehmungen gleichmäßig über die gesamte Fläche jeder Hohlkammer verteilt.

Sofern sich die Ausnehmungen über die komplette Oberfläche einer Hohlkammer erstrecken, entsteht durch die große Oberfläche zur Differenzdruckentnahme eine gute Unempfindlichkeit gegenüber ungünstigen Anströmverhältnissen im Regelbetrieb. Zusätzliche Druckverluste, wie z. B. durch im Stand der Technik verwendete Stauelemente, werden vermieden.

Daher ist die erfindungsgemäße Klappe sowohl für sehr geringe als auch für hohe Luftgeschwindigkeiten im Strömungskanal geeignet. Dies gilt auch bei ungünstigen Anströmbedingungen.

Die Klappe kann in ihrer Schließstellung einen umlaufenden Spalt aufweisen oder dicht schließend gegenüber dem Strömungskanal ausgeführt sein. Die Klappe kann eine umlaufende Dichtung im Randbereich aufweisen, sofern in der Schließstellung eine vollständige Abdichtung gegenüber dem Strömungskanal gewünscht ist.

Bei der Verwendung der Klappe in einem Volumenstromregler befindet sich die Klappe in ihrer Schließstellung üblicherweise in einem Winkel von etwa 70° bezogen auf die Mittelachse des Strömungskanals. Die Klappe weist in diesem Fall bei einem runden Strömungskanal eine etwa ovale Form auf.

Vorzugsweise befindet sich die Klappe in der Schließstellung in einem Winkel von 90° bezogen auf die Mittelachse des Strömungskanals.

In der Offenstellung ist die Klappe entweder parallel zur Strömungsrichtung ausgerichtet. Es sind aber auch Ausgestaltungen denkbar, in denen die Klappe in ihrer Offenstellung geneigt gegenüber der Mittelachse des Strömungskanals ausgerichtet ist. In diesem Fall ist die Klappe in der Offenstellung nicht parallel zur Strömungsrichtung ausgerichtet.

Zumindest eine derjenigen Ausnehmungen, die sich bei Schließstellung der Klappe in der anströmseitigen Hohlkammer befindet, kann in dem bei Offenstellung der Klappe die anströmseitige Stirnfläche bildenden Bereich der anströmseitigen Hohlkammer angeordnet sein. Auch kann zumindest eine derjenigen Ausnehmungen, die sich bei Schließstellung der Klappe in der abströmseitigen Hohlkammer befindet, in dem bei Offenstellung der Klappe die abströmseitige Stirnfläche bildenden Bereich der abströmseitigen Hohlkammer angeordnet sein.

Es bietet sich an, wenn alle Ausnehmungen, die sich bei Schließstellung der Klappe in der anströmseitigen Hohlkammer befinden, in demjenigen Teilbereich des bei Offenstellung der Klappe die anströmseitige Stirnfläche bildenden Bereiches der Hohlkammer angeordnet sind, der bezogen auf den Querschnitt des Strömungskanals in Strömungsrichtung gesehen vor dem höchsten Punkt des Konturverlaufs der Hohlkammer bei Offenstellung der Klappe liegt. Der Querschnitt des Strömungskanals ist dabei rechtwinklig zur Strömungsrichtung ausgerichtet.

Ferner bietet sich an, wenn alle Ausnehmungen, die sich bei Schließstellung der Klappe in der abströmseitigen Hohlkammer befinden, in demjenigen Teilbereich des bei Offenstellung der Klappe die abströmseitige Stirnfläche bildenden Bereiches der Hohlkammer angeordnet sind, der bezogen auf den Querschnitt des Strömungskanals in Strömungsrichtung gesehen nach dem tiefsten Punkt des Konturverlaufs der Hohlkammer bei Offenstellung der Klappe liegt.

Zumindest eine Hohlkammer kann sich über die gesamte Breite und/oder die gesamte Länge der Klappe erstrecken.

Die Hohlkammern können, vorzugsweise randseitig, entweder unmittelbar oder mittelbar über einen Wandabschnitt miteinander verbunden sein.

Dabei können die Hohlkammern eine gemeinsame, insbesondere durch die Klappe gebildete, Trennwandung haben. Die Trennwandung bewirkt eine luftdichte Abtrennung beider Hohlräume voneinander.

Jede Messstelle kann mit einem Transmitter verbunden sein, insbesondere können alle Messstellen mit einem gemeinsamen Transmitter verbunden sein. Ein Transmitter ist ein Messumformer, der eine oder mehrere Eingangsgröße(n) entsprechend einer festen Beziehung in eine Ausgangsgröße umformt. Der Transmitter wandelt das beispielsweise in der jeweiligen Hohlkammer auftretende Drucksignal in ein Spannungssignal um.

Sofern jede Messstelle mit einem eigenen Transmitter verbunden ist, wird der Differenzdruck zwischen dem in der betreffenden Hohlkammer herrschenden Druck und dem Atmosphärendruck außerhalb des Strömungskanals bestimmt. Sind die Messstellen beider Hohlkammern mit einem gemeinsamen Transmitter verbunden, wird der Differenzdruck zwischen den in beiden Hohlkammern herrschenden Drücken bestimmt.

Der Transmitter kann im Bereich der Klappe, insbesondere an bzw. in der Klappe, angeordnet sein.

Es bietet sich an, wenn der Transmitter mit einer Regeleinrichtung verbunden ist.

Es ist selbstverständlich möglich, dass auch die Regeleinrichtung im Bereich der Klappe, insbesondere an bzw. in der Klappe, angeordnet ist.

Eine besonders kompakte Ausführungsform zeichnet sich dadurch aus, dass auch ein Antrieb im Bereich der Klappe, insbesondere an bzw. in der Klappe, angeordnet ist. Bei einer solchen Ausgestaltung muss lediglich die Stromversorgung von außen zum Antrieb geführt werden.

Die Schwenkachse kann als Hohlachse ausgebildet sein.

Bei einer solchen Ausgestaltung kann die Hohlachse zur Durchführung zumindest einer Druckleitung ausgebildet sein oder die Druckleitung selbst bilden. Es ist beispielsweise denkbar, dass die Hohlachse in der Mitte ein Trennblech aufweist, dass die beiden Enden der Hohlachse gegeneinander dichtend abtrennt. Über das eine Ende der Hohlachse kann das Drucksignal der einen Hohlkammer an einen außerhalb des Strömungskanals liegenden Transmitter und über das andere Ende das Drucksignal der anderen Hohlkammer an einen außerhalb des Strömungskanals liegenden Transmitter geleitet werden.

Selbstverständlich kann die Hohlachse auch zur Durchführung zumindest einer Stromleitung ausgebildet sein oder die Stromleitung selbst bilden. Gerade die letzte Ausführungsform bietet sich an, wenn der Transmitter und/oder der Antrieb sich an der Klappe befindet. Sofern nur der Transmitter an der Klappe angeordnet ist, kann der Transmitter über eine durch die Schwenkwelle geführte Spannungsversorgung mit der Regeleinrichtung und/oder dem Antrieb verbunden sein.

Zur Bestimmung des Volumenstroms in Abhängigkeit von der Winkelstellung der Klappe kann ein mit der Regeleinrichtung verbundener Winkelmesser vorgesehen sein.

Zumindest eine Ausnehmung kann rund oder als Schlitz ausgebildet sein. Die Oberflächen der Hohlkammer sind dann gelocht, geschlitzt oder perforiert ausgebildet.

Die beiden Hohlkammern können spiegelsymmetrisch ausgebildet sein.

Die Höhe zumindest einer Hohlkammer kann entlang ihrer Länge und/oder ihrer Breite konstant ausgebildet sein.

Der Oberflächenverlauf der bei Schließstellung der Klappe anströmseitigen Hohlkammer kann bei Offenstellung der Klappe in Strömungsrichtung gesehen zunächst einen Verlauf entsprechend einer konvexen Krümmung und anschließend einen Verlauf entsprechend einer konkaven Krümmung aufweisen, wobei vorzugsweise der Übergang von der konvexen Krümmung in die konkave Krümmung im Bereich der Schwenkachse liegt.

Der Oberflächenverlauf der bei Schließstellung der Klappe abströmseitigen Hohlkammer kann bei Offenstellung der Klappe in Strömungsrichtung gesehen zunächst einen Verlauf entsprechend einer konkaven Krümmung und anschließend einen Verlauf entsprechend einer konvexen Krümmung aufweisen, wobei vorzugsweise der Übergang von der konkaven Krümmung in die konvexe Krümmung im Bereich der Schwenkachse liegt.

Selbstverständlich ist es auch möglich, dass die Höhe zumindest einer Hohlkammer entlang ihrer Länge und/oder ihrer Breite von der Mitte der Klappe zu dem jeweiligen Rand hin abnimmt. Diese Abnahme kann kontinuierlich oder auch diskontinuierlich erfolgen. Damit sind beispielsweise linsenförmige Querschnitte der Klappe möglich.

Die Schwenkachse kann mittig in dem Strömungskanal gelagert sein.

Die Klappe kann aus Kunststoff oder anderen Materialien wie beispielsweise aus Metall, insbesondere aus Aluminium gefertigt sein.

Es bietet sich an, wenn im Bereich zumindest einer Hohlkammer, vorzugsweise im Bereich der anströmseitigen Hohlkammer, zumindest ein Sensor, insbesondere ein als Luftqualitätsfühler ausgebildeter Sensor und/oder ein Temperatursensor, angeordnet ist. Der Sensor kann in der Hohlkammer oder auch auf der Oberfläche einer Hohlkammer angeordnet sein.

In einer Ausführungsform der Erfindung ist in Strömungsrichtung gesehen hinter zumindest einer Ausnehmung, die sich bei Schließstellung der Klappe in der anströmseitigen Hohlkammer befindet, ein, insbesondere wandähnlich ausgebildetes, Strömungshindernis angeordnet. Das Strömungshindernis kann beispielsweise als gegenüber der Oberfläche der Klappe vorstehender Wandabschnitt ausgebildet sein, der sich parallel zur Schwenkachse erstreckt. Vor diesem Strömungshindernis staut sich das strömende Medium auf. Hierdurch wird ein größerer Staudruck und damit im Ergebnis ein höheres Wirkdrucksignal erzielt. Die Ausnehmungen können durch diese Ausgestaltung beliebig in der anströmseitigen Hohlkammer unabhängig von dem Verlauf der Oberfläche der anströmseitigen Hohlkammer angeordnet sein. Auch in einer Offenstellung, in der die Klappe parallel zur Strömungsrichtung ausgerichtet ist, ist aufgrund der Strömungshindernisse eine Wirkdruckentnahme möglich. Darüber hinaus kann die Klappe in einer geringeren Dicke ausgestaltet sein, so dass der Strömungswiderstand reduziert wird.

Aus strömungstechnischen und akustischen Gründen bietet sich an, wenn sich die Breite zumindest eines Strömungshindernisses in Strömungsrichtung gesehen und/ oder sich die Höhe zumindest eines Strömungshindernisses in Strömungsrichtung gesehen verringert.

In einer weiteren Ausführungsform der Erfindung ist in Strömungsrichtung gesehen vor zumindest einer Ausnehmung, die sich bei Schließstellung der Klappe in der abströmseitigen Hohlkammer befindet, ein, insbesondere wandähnlich ausgebildetes, Strömungshindernis angeordnet. Das Strömungshindernis kann beispielsweise als gegenüber der Oberfläche der Klappe vorstehender Wandabschnitt ausgebildet sein, der sich parallel zur Schwenkachse erstreckt. Durch das Strömungshindernis entsteht ein größerer Unterdruck, so dass auf diese Weise ein höheres Wirkdrucksignal erzielt wird. Die Ausnehmungen können beliebig in der abströmseitigen Hohlkammer unabhängig von dem Verlauf der Oberfläche der abströmseitigen Hohlkammer vorgesehen sein. Auch in einer Offenstellung, in der die Klappe parallel zur Strömungsrichtung ist, ist aufgrund der Strömungshindernisse eine Wirkdruckentnahme möglich. Darüber hinaus kann die Klappe in einer geringeren Dicke ausgestaltet sein, so dass der Strömungswiderstand reduziert wird.

Aus strömungstechnischen und akustischen Gründen bietet sich an, wenn sich die Breite zumindest eines Strömungshindernisses in Strömungsrichtung gesehen und/oder sich die Höhe zumindest eines Strömungshindernisses in Strömungsrichtung gesehen vergrößert.

Zumindest ein Strömungshindernis kann eine gleiche, vorzugsweise eine größere, Breite orthogonal zur Strömungsrichtung gesehen als die Breite der diesem Strömungshindernis zugeordneten Ausnehmung aufweisen.

Im Folgenden werden in den Zeichnungen dargestellte Ausführungsbeispiele der Erfindung erläutert. Es zeigen:
- Fig. 1: eine Seitenansicht auf ein erstes Ausführungsbeispiel einer Klappe,
- Fig. 2: eine Seitenansicht auf ein zweites Ausführungsbeispiel einer Klappe,
- Fig. 3: eine Seitenansicht auf ein drittes Ausführungsbeispiel einer Klappe,
- Fig. 4: einen Schnitt durch ein viertes Ausführungsbeispiel einer Klappe,
- Fig. 5: einen Schnitt durch ein fünftes Ausführungsbeispiel einer Klappe,
- Fig. 6: einen Schnitt durch ein sechstes Ausführungsbeispiel einer Klappe,
- Fig. 7: einen Schnitt durch ein siebtes Ausführungsbeispiel einer Klappe,
- Fig. 8: einen Schnitt durch ein achtes Ausführungsbeispiel einer Klappe,
- Fig. 9: einen Längsschnitt durch ein neuntes Ausführungsbeispiel einer Klappe,
- Fig. 10: einen Schnitt durch ein zehntes Ausführungsbeispiel einer Klappe,
- Fig. 11: einen Schnitt durch ein elftes Ausführungsbeispiel einer Klappe,
- Fig. 12: einen Schnitt durch ein zwölftes Ausführungsbeispiel einer Klappe,
- Fig. 13: einen Schnitt durch ein dreizehntes Ausführungsbeispiel einer Klappe,
- Fig. 14: den Gegenstand nach Fig. 13 mit einem Temperatursensor,
- Fig. 15: den Gegenstand nach Fig. 13 mit einem Luftqualitätssensor,
- Fig. 16: einen Schnitt durch ein Ausführungsbeispiel einer erfindungsgemäßen Klappe,
- Fig. 17: eine Ansicht von unten auf den Gegenstand nach Fig. 16 und
- Fig. 18: eine Ansicht von oben auf den Gegenstand nach Fig. 16.

In allen Figuren werden für gleiche bzw. gleichartige Bauteile übereinstimmende Bezugszeichen verwendet.

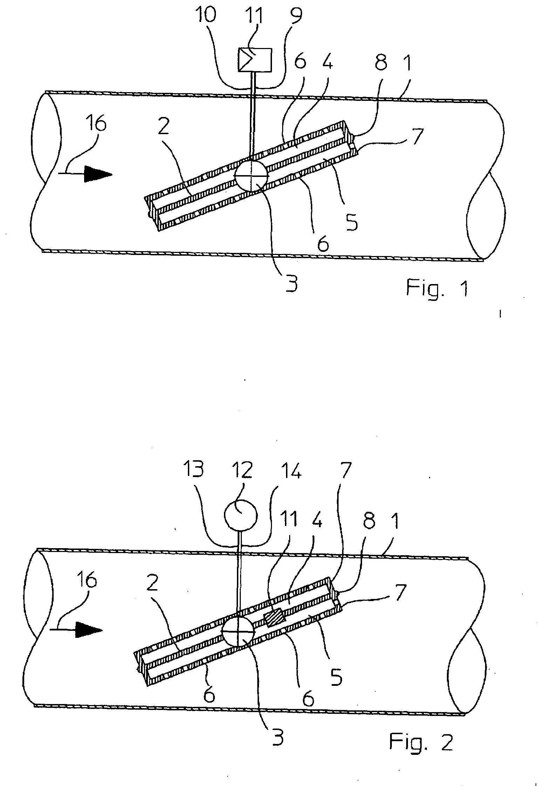

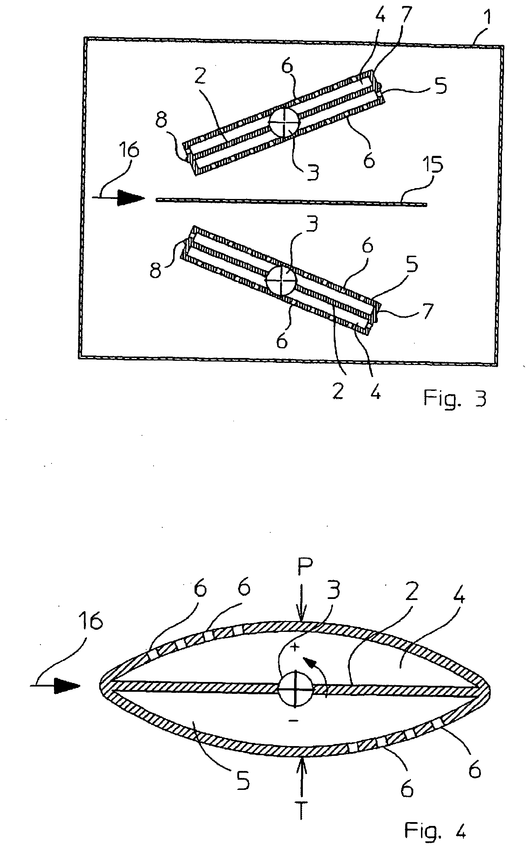

In den Figuren ist ein Strömungskanal dargestellt, wobei bei den Ausführungsbeispielen nach den Figuren 1 und 2 eine Klappe 2 und bei dem Ausführungsbeispiel nach Figur 3 zwei Klappen 2 in dem Strömungskanal 1 angeordnet sind. Jede Klappe 2 ist drehbar um eine Schwenkachse 3 gelagert. Jede Klappe 2 weist auf ihren beiden Klappenflächen jeweils eine Hohlkammer 4, 5 auf. Die Oberfläche jeder Hohlkammer 4, 5 ist mit einer Vielzahl an nach einer Perforation ausgebildeten Ausnehmungen 6 versehen. Jede Hohlkammer 4, 5 erstreckt sich über die gesamte Breite und die gesamte Länge der jeweiligen Klappe 2.

Bei den dargestellten Ausführungsbeispielen sind die Hohlkammern 4, 5 jeder Klappe 2 mittelbar über einen umlaufenden Wandabschnitt 7, der von der Klappe 2 unterbrochen wird, miteinander verbunden. Jede Hohlkammer 4, 5 ist mittels einer umlaufenden Dichtung 8 gegenüber der Klappe 2 abgedichtet. Die Hohlkammern 4, 5 einer Klappe 2 haben damit eine gemeinsame, durch die Klappe 2 gebildete Trennwandung.

Zusätzlich ist eine Vorrichtung zur Bestimmung des Volumenstroms des in dem Strömungskanals 1 strömenden Mediums vorgesehen, die in dem dargestellten Ausführungsbeispiel zwei Messstellen umfasst. Die eine Messstelle ist in der einen Hohlkammer 4 und die andere Messstelle in der anderen Hohlkammer 5.

Bei dem Ausführungsbeispiel nach den Figuren 1 und 2 ist jede Schwenkachse 3 als Hohlachse ausgebildet. Jede Messstelle ist über eine Druckleitung 9, 10 mit einem Transmitter 11 verbunden.

Bei dem Ausführungsbeispiel nach Figur 1 ist der Transmitter 11 außerhalb des Strömungskanals 1 angeordnet. In dem dargestellten Ausführungsbeispiel umfasst der Transmitter 11 auch eine Regeleinrichtung. Der Transmitter 11 und die Regeleinrichtung sind mit einem nicht dargestellten Antrieb verbunden. Bei dem Ausführungsbeispiel nach Figur 1 sind die Druckleitungen 9, 10 durch die Schwenkachse 3 nach außen zum Transmitter 11 geführt.

In Figur 2 ist ein Ausführungsbeispiel dargestellt, bei dem der Transmitter 11 und die Regeleinrichtung an der Klappe 2 angeordnet ist. Der mit dem Transmitter 11 und der Regeleinrichtung verbundene Antrieb 12 ist außerhalb des Strömungskanals 1 angeordnet. Über Stromleitungen 13, 14 sind der Transmitter 11 und die Regeleinrichtung mit dem Antrieb 12 verbunden. Bei dem Ausführungsbeispiel nach Figur 2 sind die Stromleitungen 13, 14 durch die Schwenkachse 3 nach außen geführt.

Bei dem Ausführungsbeispiel nach Figur 3 sind zwei Klappen 2 in dem Strömungskanal 1 angeordnet, wobei zwischen beiden Klappen 2 eine Trennwandung 15 vorgesehen ist. Der Strömungskanal 1 hat in dem dargestellten Ausführungsbeispiel einen viereckigen Strömungsquerschnitt. Der Transmitter 11, die Regeleinrichtung und der Antrieb 12 zu jeder Klappe 2 sind aus Gründen der Übersichtlichkeit nicht dargestellt.

Strömt ein gasförmiges Medium in Richtung des Pfeils 16, entsteht in der anströmseitigen Hohlkammer 4 der Klappe 2 ein Überdruck und in der abströmseitigen Hohlkammer 5 ein Unterdruck. In dem Transmitter 11 wird der Differenzdruck zwischen der anströmseitigen und der abströmseitigen Hohlkammer 4, 5 bestimmt und in ein Spannungssignal umgewandelt. Entsprechend einer hinterlegten Kennlinie kann dem Spannungssignal eine Strömungsgeschwindigkeit (Istwert) zugeordnet werden. Weicht der gemessene Istwert von dem hinterlegten Sollwert ab, wird ein entsprechendes Regelsignal an den Antrieb 12 ausgesandt, so dass die Winkelstellung der Klappe 2 verändert wird.

In Fig. 4 ist eine spiegelsymmetrisch ausgebildete Klappe 2 dargestellt, wobei die Höhe beider Hohlkammern 4, 5 von der Mitte der Klappe 2 zu dem anströmseitigen Rand und zu dem abströmseitigen Rand hin abnimmt.

Wie Fig. 4 zu entnehmen ist, sind alle Ausnehmungen 6, die sich bei Schließstellung der Klappe 2 in der anströmseitigen Hohlkammer 4 befinden, in demjenigen Teilbereich des bei Offenstellung der Klappe 2 die anströmseitige Stirnfläche bildenden Bereiches der Hohlkammer 4 angeordnet, der bezogen auf den Querschnitt des Strömungskanals 1 in Strömungsrichtung 16 gesehen vor dem höchsten Punkt P des Konturverlaufs der Hohlkammer 4 bei Offenstellung der Klappe 2 liegt.

Soweit es die Ausnehmungen 6 in der in der Schließstellung der Klappe 2 abströmseitigen Hohlkammer 5 betrifft, sind diese in demjenigen Teilbereich des bei Offenstellung der Klappe 2 die abströmseitige Stirnfläche bildenden Bereiches der Hohlkammer 5 angeordnet, der bezogen auf den Querschnitt des Strömungskanals 1 in Strömungsrichtung 16 gesehen nach dem tiefsten Punkt T des Konturverlaufs der Hohlkammer 5 bei Offenstellung der Klappe 2 liegt.

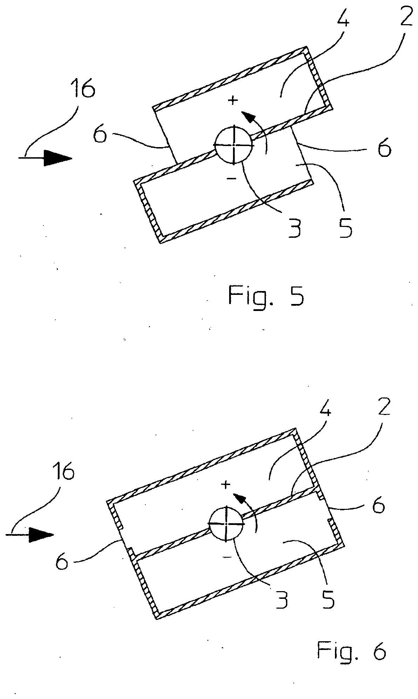

In den Fig. 5 und 6 ist jeweils ein Ausführungsbeispiel dargestellt, in dem in den beiden Hohlräumen 4, 5 jeweils nur eine Ausnehmung 6 vorgesehen ist. Soweit es die sich bei Schließstellung der Klappe 2 in der anströmseitigen Hohlkammer 4 befindliche Ausnehmung 6 betrifft, befindet sich diese in dem bei Offenstellung der Klappe 2 die anströmseitige Stirnfläche bildenden Bereich der Hohlkammer 4.

Die Ausnehmung 6 der Hohlkammer 5 weist in die entgegengesetzte Richtung. So ist die Ausnehmung 6, die sich bei Schließstellung der Klappe in der abströmseitigen Hohlkammer 5 befindet, in dem bei Offenstellung der Klappe 2 die abströmseitige Stirnfläche bildenden Bereich der Hohlkammer 5.

In Fig. 5 bildet die jeweilige Ausnehmung 6 die komplette anströmseitige bzw. abströmseitige Stirnfläche. In Fig. 6 ist jede Ausnehmung 6 kleiner als die jeweilige anströmseitige bzw. abströmseitige Stirnfläche ausgebildet.

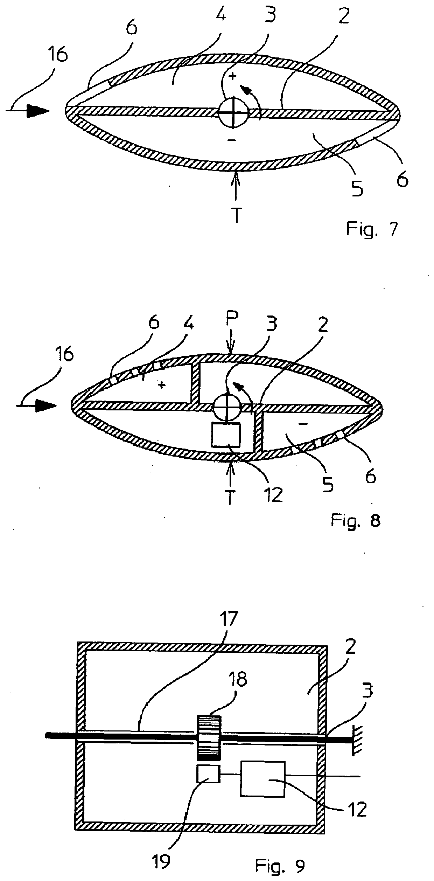

In Fig. 7 ist eine Ausführungsform dargestellt, die pro Hohlkammer 4, 5 nur eine Ausnehmung 6 aufweist. Die Ausnehmung 6 der anströmseitigen Hohlkammer 4 ist in dem bei Offenstellung der Klappe 2 die anströmseitige Stirnfläche bildenden Bereich vorgesehen. Die Ausnehmung 6 der abströmseitigen Hohlkammer 5 ist in dem bei Offenstellung der Klappe 2 die abströmseitigen Stirnfläche bildenden Bereich angeordnet.

Das Ausführungsbeispiel nach Fig. 8 weicht von der Klappe 2 nach Fig. 4 insoweit ab, als sich bei der Klappe 2 nach Fig. 4 jede Hohlkammer 4, 5 über die komplette Länge der Klappe 2 erstreckt, während bei Fig. 8 sich jede Hohlkammer 4, 5 nur über einen Teilbereich erstreckt. Ferner ist bei dem Ausführungsbeispiel nach Fig. 8 ein Antrieb 12 direkt in die Klappe 2 integriert.

In Fig. 9 ist ein Schnitt durch eine erfindungsgemäße Klappe 2 mit einem integrierten Antrieb 12 dargestellt. Die Klappe 2 besteht in dem dargestellten Ausführungsbeispiel aus zwei Hälften, wobei jede Hälfte eine Trennwandung aufweist. Im montierten Zustand beider Hälften berühren sich die beiden Trennwandungen, wobei die beiden Trennwandungen zwischen sich eine Ausnehmung 17 zum Durchführen der Schwenkachse 3 bilden. Die Schwenkachse 3 ist drehfest gegenüber dem nicht dargestellten Strömungskanal 1 angeordnet. Auf der Schwenkachse 3 ist ein Zahnrad 18 montiert, das mit einem mit dem Antrieb 12 verbundenen Ritzel 19 zusammenwirkt.

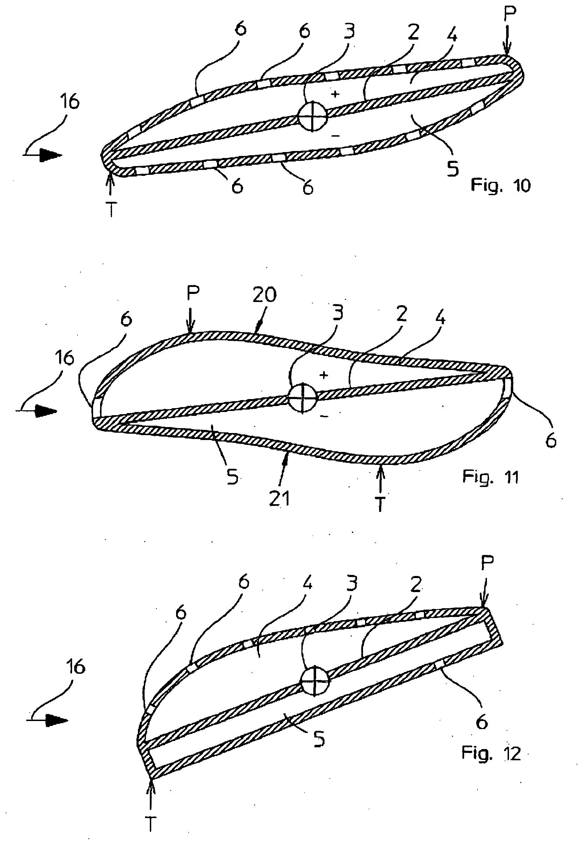

Während beispielsweise in den Fig. 4, 7 und 8 eine Klappe 2 dargestellt ist, die in der Offenstellung parallel zur Strömungsrichtung 16 angeordnet ist, zeigen die Fig. 10 bis 12 Klappen 2, die in der Offenstellung gegenüber der Strömungsrichtung 16 geneigt ausgerichtet sind, d. h. in der Offenstellung nicht parallel zur Strömungsrichtung 16 ausgerichtet sind.

Aus diesem Grunde können sich bei den Ausführungsbeispielen nach den Fig. 10 und 12 die Ausnehmungen 6 über die komplette Hohlkammer 4 erstrecken, da der höchste Punkt P des Konturverlaufes der Hohlkammer 4 bei Offenstellung der Klappe 2 im Bereich der abströmseitigen Stirnfläche befindet.

Bei dem Ausführungsbeispiel nach Fig. 10 sind auch die Ausnehmungen 6 der Hohlkammer 5 über die komplette Fläche der Hohlkammer 5 angeordnet, da sich der tiefste Punkt T des Konturverlaufes der Hohlkammer 5 in der Offenstellung der Klappe 2 im Bereich der anströmseitigen Stirnfläche liegt.

Bei dem Ausführungsbeispiel nach Fig. 12 ist in der abströmseitigen Hohlkammer 5 lediglich eine Ausnehmung 12 vorgesehen.

In Fig. 11 ist ein Ausführungsbeispiel dargestellt, bei dem der Oberflächenverlauf der bei Schließstellung der Klappe 2 anströmseitigen Hohlkammer 4 bei Offenstellung der Klappe 2 in Strömungsrichtung 16 gesehen zunächst einen Verlauf entsprechend einer konvexen Krümmung und anschließend einen Verlauf entsprechend einer konkaven Krümmung aufweist, wobei der Übergang 20 von der konvexen Krümmung in die konkave Krümmung im Bereich der Schwenkachse 3 liegt.

Soweit es die abströmseitige Hohlkammer 5 betrifft, weist der Oberflächenverlauf bei der bei Schließstellung der Klappe 2 abströmseitigen Hohlkammer 5 bei Offenstellung der Klappe 2 in Strömungsrichtung 16 gesehen zunächst einen Verlauf entsprechend einer konkaven Krümmung und anschließend einen Verlauf entsprechend einer konvexen Krümmung auf, wobei der Übergang 21 von der konkaven in die konvexe Krümmung im Bereich der Schwenkachse 3 liegt.

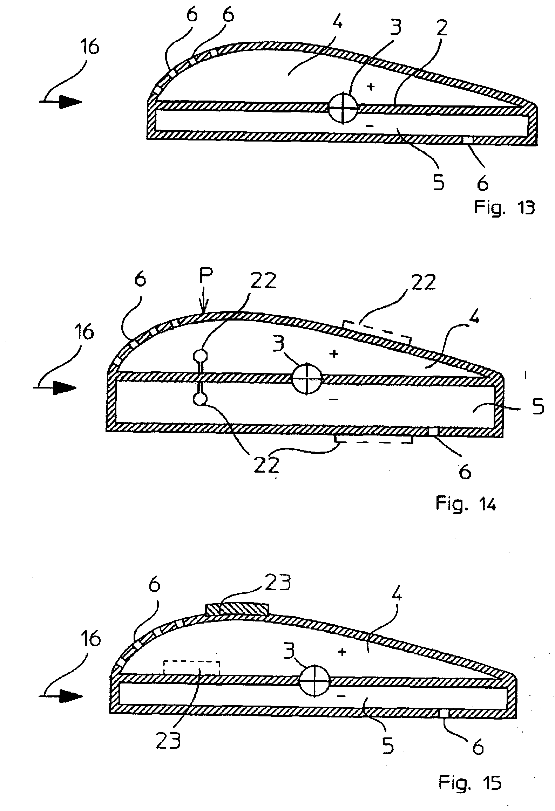

In den Fig. 13 bis 15 sind noch weitere Ausführungsbeispiele dargestellt. Soweit es Fig. 14 betrifft, ist in der anströmseitigen Hohlkammer 4 ein Temperatursensor 22 vorgesehen. Dieser Temperatursensor 22 kann selbstverständlich auch in der abströmseitigen Hohlkammer 5 oder auf einer der Oberflächen der Hohlkammern 4, 5 angeordnet sein. Diese Positionen sind gestrichelt dargestellt.

In Fig. 15 ist ein Ausführungsbeispiel dargestellt, bei dem auf der Oberfläche der Hohlkammer 4 ein Luftqualitätsfühler 23 angeordnet ist. Dieser kann auch, wie gestrichelt angedeutet, in der Hohlkammer 4 angeordnet sein.

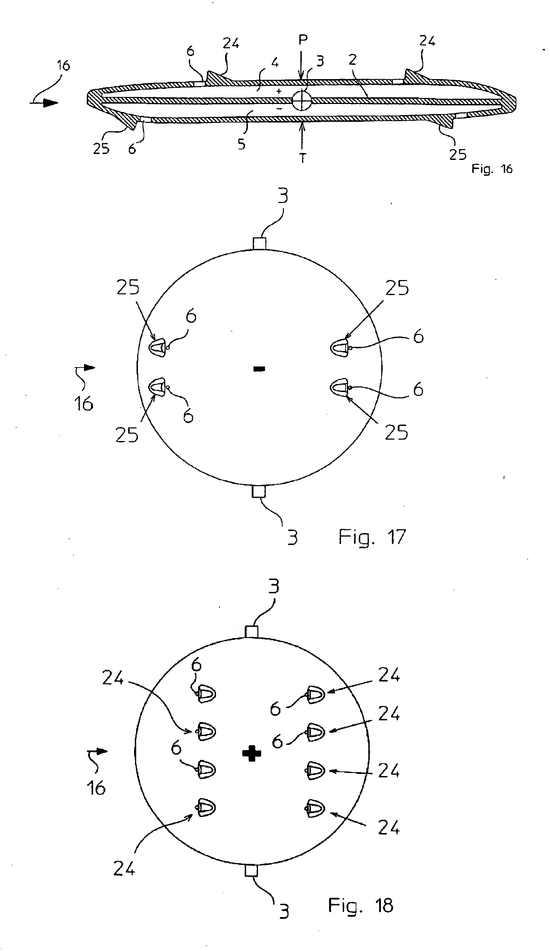

In den Fig. 16 bis 18 ist ein erfindungsgemäßes Ausführungsbeispiel einer spiegelsymmetrisch ausgebildeten Klappe 2 dargestellt. Die Höhe beider Hohlkammern 4, 5 nimmt jeweils von der Mitte der Klappe 2 zu dem anströmseitigen Rand und zu dem abströmseitigen Rand hin ab.

Wie Fig. 16 zu entnehmen ist, sind sowohl in der anströmseitigen Hohlkammer 4 als auch in der abströmseitigen Hohlkammer 5 mehrere Ausnehmungen 6 vorgesehen. In der dargestellten Offenstellung ist die Klappe 2 parallel zur Strömungsrichtung 16 ausgerichtet.

Die Ausnehmungen 6 in der anströmseitigen Hohlkammer 4 befinden sich zum einen in dem Teilbereich, der bezogen auf den Querschnitt des Strömungskanals 1 in der Offenstellung in Strömungsrichtung 16 gesehen vor dem höchsten Punkt P des Konturverlaufs der Hohlkammer 4 bei Offenstellung der Klappe 2 liegt. Zum anderen befinden sich aber auch Ausnehmungen 6 in der anströmseitigen Hohlkammer 4 in dem Teilbereich, der bezogen auf den Querschnitt des Strömungskanals 1 in der Offenstellung in Strömungsrichtung 16 gesehen hinter dem höchsten Punkt P des Konturverlaufs der Hohlkammer 4 bei Offenstellung der Klappe 2 liegt.

Gleiches gilt in Bezug auf die Ausnehmungen 2 in der in der Schließstellung der Klappe 2 abströmseitigen Hohlkammer 5. So befinden sich die Ausnehmungen 6 zum einen in demjenigen Teilbereich der Hohlkammer 5, der bezogen auf den Querschnitt des Strömungskanals 1 in der Offenstellung in Strömungsrichtung 16 gesehen nach dem tiefsten Punkt T des Konturverlaufs der Hohlkammer 5 bei Offenstellung der Klappe 2 liegt. Zum anderen befinden sich aber auch Ausnehmungen 2 in demjenigen Teilbereich der Hohlkammer 5, der bezogen auf den Querschnitt des Strömungskanals 1 in der Offenstellung in Strömungsrichtung 16 gesehen vor dem tiefsten Punkt T des Konturverlaufs der Hohlkammer 5 bei Offenstellung der Klappe 2 liegt.

Wie den Figuren 16 und 18 zu entnehmen ist, ist in Strömungsrichtung 16 gesehen hinter jeder Ausnehmung 2, die sich bei Schließstellung der Klappe 2 in der anströmseitigen Hohlkammer 4 befindet, ein Strömungshindernis 24 angeordnet. Im Bereich jedes Strömungshindernisses 24 staut sich die strömende Luft auf. Wie in Fig. 18 dargestellt ist, verringert sich sowohl die Breite jedes Strömungshindernisses 24 in Strömungsrichtung 16 gesehen als auch die Höhe jedes Strömungshindernisses 24 in Strömungsrichtung 16 gesehen. Damit hat jedes Strömungshindernis 24 die Form eines in Strömungsrichtung 16 gesehen spitz zulaufenden Keils.

Bei den Ausnehmungen 6 im Bereich der abströmseitigen Hohlkammer 5 ist in Strömungsrichtung gesehen vor jeder Ausnehmung 6 ein Strömungshindernis 25 angeordnet. Wie in Fig. 17 dargestellt ist, vergrößert sich sowohl die Breite jedes Strömungshindernisses 25 in Strömungsrichtung 16 gesehen als auch die Höhe jedes Strömungshindernisses 25 in Strömungsrichtung 16 gesehen. Damit hat jedes Strömungshindernis 25 die Form eines entgegen die Strömungsrichtung 16 gesehen spitz zulaufenden Keils.

Bei dem dargestellten Ausführungsbeispiel weisen die Strömungshindernisse 24, 25 eine größere Breite orthogonal zur Strömungsrichtung 16 gesehen als die Breite der jedem Strömungshindernis 24 bzw. 25 zugeordneten Ausnehmung 6 auf.

Aufgrund der Konstruktion nach den Fig. 16 bis 18 ist eine deutlich flachere Klappe 2 im Vergleich beispielsweise zu dem Ausführungsbeispiel nach Fig. 4 realisierbar. Zudem können die Ausnehmungen 6 aufgrund der Strömungshindernisse 24 bzw. 25 beliebig angeordnet sein. Die Klappe 2 kann in ihrer Offenstellung parallel zur Strömungsrichtung 16 ausgerichtet sein. Auch in dieser Offenstellung ist eine Wirkdruckentnahme aufgrund der Strömungshindernisse 24 bzw. 25 möglich.

## Patentansprüche

1. Klappe (2) zur Anordnung in einem Strömungskanal (1) einer klimatechnischen Anlage, wobei die Klappe (2) zwei Klappenflächen aufweist und drehbar um eine Schwenkachse (3) gelagert ist und wobei eine Vorrichtung mit zwei Messstellen zur Bestimmung des Volumenstroms eines gasförmigen, in dem Strömungskanal strömenden Mediums vorgesehen ist, wobei die Klappe (2) auf ihren beiden Klappenflächen jeweils eine Hohlkammer (4, 5) aufweist, **dadurch gekennzeichnet, dass** jede Hohlkammer (4, 5) mit einer Vielzahl an nach Art einer Perforation ausgebildeten Ausnehmungen (6), versehen ist, und wobei die eine Messstelle mit der einen Hohlkammer (4 bzw.5) und die andere Messstelle mit der anderen Hohlkammer (5 bzw. 4) verbunden sind und dass
a) in Strömungsrichtung (16) gesehen hinter zumindest einer Ausnehmung (6), die sich bei Schließstellung der Klappe (2) in der anströmseitigen Hohlkammer (4) befindet, ein Strömungshindernis (24) angeordnet ist, wobei vorzugsweise
a1) sich die Breite zumindest eines Strömungshindernisses (24) in Strömungsrichtung (16) gesehen verringert,
und/oder
a2) sich die Höhe zumindest eines Strömungshindernisses (24) in Strömungsrichtung (16) gesehen verringert
und/oder
b) in Strömungsrichtung (16) gesehen vor zumindest einer Ausnehmung (6), die sich bei Schließstellung der Klappe (2) in der abströmseitigen Hohlkammer (5) befindet, ein Strömungshindernis (25) angeordnet ist, wobei vorzugsweise
b1) sich die Breite zumindest eines Strömungshindernisses (25) in Strömungsrichtung (16) gesehen vergrößert,
und/oder
b2) sich die Höhe zumindest eines Strömungshindernisses (25) in Strömungsrichtung (16) gesehen vergrößert.

2. Klappe (2) nach dem vorhergehenden Anspruch, **dadurch gekennzeichnet, dass** zumindest eine derjenigen Ausnehmungen (6), die sich bei Schließstellung der Klappe (2) in der anströmseitigen Hohlkammer (4) befindet, in dem bei Offenstellung der Klappe (2) die anströmseitige Stirnfläche bildenden Bereich der Hohlkammer (4) angeordnet ist und/oder dass zumindest eine derjenigen Ausnehmungen (6), die sich bei Schließstellung der Klappe (2) in der abströmseitigen Hohlkammer (5) befindet, in dem bei Offenstellung der Klappe (2) die abströmseitige Stirnfläche bildenden Bereich der Hohlkammer (5) angeordnet ist.

3. Klappe (2) nach einem der vorhergehenden Ansprüche, **dadurch gekennzeichnet, dass** alle Ausnehmungen (6), die sich bei Schließstellung der Klappe (2) in der anströmseitigen Hohlkammer (4) befinden, in demjenigen Teilbereich des bei Offenstellung der Klappe (2) die anströmseitige Stirnfläche bildenden Bereiches der Hohlkammer (4) angeordnet sind, der bezogen auf den Querschnitt des Strömungskanals (1) in Strömungsrichtung (16) gesehen vor dem höchsten Punkt P des Konturverlaufs der Hohlkammer (4) bei Offenstellung der Klappe (2) liegt und/oder alle Ausnehmungen (6), die sich bei Schließstellung der Klappe (2) in der abströmseitigen Hohlkammer (5) befinden, in demjenigen Teilbereich des bei Offenstellung der Klappe (2) die abströmseitige Stirnfläche bildenden Bereiches der Hohlkammer (5) angeordnet sind, der bezogen auf den Querschnitt des Strömungskanals (1) in Strömungsrichtung (16) gesehen nach dem tiefsten Punkt T des Konturverlaufs der Hohlkammer (5) bei Offenstellung der Klappe (2) liegt.

4. Klappe (2) nach einem der vorhergehenden Ansprüche, **dadurch gekennzeichnet, dass** zumindest eine Hohlkammer (4, 5) sich über die gesamte Breite und/oder die gesamte Länge der Klappe (2) erstreckt.

5. Klappe (2) nach einem der vorhergehenden Ansprüche, **dadurch gekennzeichnet, dass** die Hohlkammern (4, 5), vorzugsweise randseitig, entweder unmittelbar oder mittelbar über einen Wandabschnitt (7) miteinander verbunden sind.

6. Klappe (2) nach einem der vorhergehenden Ansprüche, **dadurch gekennzeichnet, dass** die Hohlkammern (4, 5) eine gemeinsame, insbesondere durch die Klappe (2) gebildete, Trennwandung haben.

7. Klappe (2) nach einem der vorhergehenden Ansprüche, **dadurch gekennzeichnet, dass** jede Messstelle mit einem Transmitter (11) verbunden ist, insbesondere alle Messstellen mit einem gemeinsamen Transmitter (11) verbunden sind.

8. Klappe (2) nach dem vorhergehenden Anspruch, **dadurch gekennzeichnet, dass** der Transmitter (11) im Bereich der Klappe (2), insbesondere an der Klappe (2), angeordnet ist.

9. Klappe (2) nach einem der Ansprüche 7 oder 8, **dadurch gekennzeichnet, dass** der Transmitter (11) mit einer Regeleinrichtung verbunden ist.

10. Klappe (2) nach dem vorhergehenden Anspruch, **dadurch gekennzeichnet, dass** die Regeleinrichtung im Bereich der Klappe (2), insbesondere an der Klappe (2), angeordnet ist.

11. Klappe (2) nach einem der vorhergehenden Ansprüche, **dadurch gekennzeichnet, dass** ein Antrieb (12) im Bereich der Klappe (2), insbesondere an der Klappe (2), angeordnet ist.

12. Klappe (2) nach einem der vorhergehenden Ansprüche, **dadurch gekennzeichnet, dass** die Schwenkachse (3) als Hohlachse ausgebildet ist.

13. Klappe (2) nach dem vorhergehenden Anspruch, **dadurch gekennzeichnet, dass** die Hohlachse zur Durchführung zumindest einer Druckleitung (9, 10) ausgebildet ist oder die Druckleitung (9, 10) selber bildet.

14. Klappe (2) nach einem der Ansprüche 12 oder 13, **dadurch gekennzeichnet, dass** die Hohlachse zur Durchführung zumindest einer Stromleitung (13, 14) ausgebildet ist oder die Stromleitung (13, 14) selbst bildet.

15. Klappe (2) nach einem der Ansprüche 9 oder 10 oder einem der Ansprüche 11-14, soweit diese Ansprüche auf die Ansprüche 9 oder 10 zurückbezogen sind, **dadurch gekennzeichnet, dass** zur Bestimmung des Volumenstroms in Abhängigkeit von der Winkelstellung der Klappe (2) ein mit der Regeleinrichtung verbundener Winkelmesser vorgesehen ist.

16. Klappe (2) nach einem der vorhergehenden Ansprüche, **dadurch gekennzeichnet, dass** zumindest eine Ausnehmung (6) rund oder als Schlitz ausgebildet ist.

17. Klappe (2) nach einem der vorhergehenden Ansprüche, **dadurch gekennzeichnet, dass** die beiden Hohlkammern (4, 5) spiegelsymmetrisch ausgebildet sind.

18. Klappe (2) nach einem der vorhergehenden Ansprüche, **dadurch gekennzeichnet, dass** die Höhe zumindest einer Hohlkammer (4, 5) entlang ihrer Länge und/oder ihrer Breite konstant ist.

19. Klappe (2) nach einem der vorhergehenden Ansprüche, **dadurch gekennzeichnet, dass** der Oberflächenverlauf der bei Schließstellung der Klappe (2) anströmseitigen Hohlkammer (4) bei Offenstellung der Klappe (2) in Strömungsrichtung (16) gesehen zunächst einen Verlauf entsprechend einer konvexen Krümmung und anschließend einen Verlauf entsprechend einer konkaven Krümmung aufweist und/oder der Oberflächenverlauf der bei Schließstellung der Klappe (2) abströmseitigen Hohlkammer (5) bei Offenstellung der Klappe (2) in Strömungsrichtung (16) gesehen zunächst einen Verlauf entsprechend einer konkaven Krümmung und anschließend einen Verlauf entsprechend einer konvexen Krümmung aufweist.

20. Klappe (2) nach einem der vorhergehenden Ansprüche, **dadurch gekennzeichnet, dass** die Höhe zumindest einer Hohlkammer (4, 5) entlang ihrer Länge und/oder ihrer Breite von der Mitte der Klappe (2) zu dem jeweiligen Rand hin abnimmt.

21. Klappe (2) nach einem der vorhergehenden Ansprüche, **dadurch gekennzeichnet, dass** im Bereich zumindest einer Hohlkammer (4, 5), vorzugsweise im Bereich der anströmseitigen Hohlkammer (4), zumindest ein Sensor, insbesondere ein als Luftqualitätsfühler (23) ausgebildeter Sensor und/oder ein Temperatursensor (22), angeordnet ist.

22. Klappe (2) nach einem der vorhergehenden Ansprüche, **dadurch gekennzeichnet, dass** zumindest ein Strömungshindernis (24, 25) eine gleiche, vorzugsweise eine größere, Breite orthogonal zur Strömungsrichtung (16) gesehen als die Breite der diesem Strömungshindernis (24, 25) zugeordneten Ausnehmung (6) aufweist.

## Claims

1. Valve (2) for assembly in a flow channel (1) of an air conditioning system, wherein the valve (2) comprises two valve faces and is mounted for rotation about a pivoting spindle (3), and with a device having two measurement points is provided for determining the volume flow rate of a gaseous medium flowing in the flow channel, wherein the valve (2) comprises on each of its two valve faces a hollow chamber (4, 5), **characterised in that** each hollow chamber (4, 5) is provided with a plurality of recesses (6) configured in the manner of a perforation, and with the one measurement point being connected to the one hollow chamber (4 or 5) and the other measurement point is connected to the other hollow chamber (5 or 4), and that
a) a flow obstacle (24) is positioned, when viewed in the direction of flow (16), behind at least one recess (6), which is present in the upstream hollow chamber (4) when the valve (2) is closed, wherein preferably
a1) the width of at least one flow obstacle (24) decreases when viewed in the direction of flow (16),
and/or
a2) the height of at least one flow obstacle (24) decreases when viewed in the direction of flow (16)
and/or
b) a flow obstacle (25) is positioned, when viewed in the direction of flow (16), in front of at least one recess (6), which is present in the downstream hollow chamber (5) when the valve (2) is closed , wherein preferably
b1) the width of at least one flow obstacle (25) increases when viewed in the direction of flow (16),
and/or
b2) the height of at least one flow obstacle (25) increases when viewed in the direction of flow (16).

2. The valve (2) according to the preceding claim, **characterised in that** at least one of the recesses (6) which, when the valve (2) is closed, is in the upstream hollow chamber (4), is arranged in the region of the hollow chamber (4) which forms the upstream end face when the valve (2) is open, and/or wherein at least one of the recesses (6) which, when the valve (2) is closed, is in the downstream hollow chamber (5), is arranged in the region of the hollow chamber (5) which forms the downstream end face when the valve (2) is open.

3. The valve (2) according to any one of the preceding claims, **characterised in that** all the recesses (6) which are in the upstream hollow chamber (4) when the valve (2) is closed are arranged **in that** partial region of the region of the hollow chamber (4) forming the upstream end face when the valve (2) is closed, which, relative to the cross-section of the flow channel (1) and when viewed in the direction of flow (16), lies before the highest point P on the contour profile of the hollow chamber (4) when the valve (2) is open, and/or wherein all recesses (6) which are in the downstream hollow chamber (5) when the valve (2) is closed, are arranged **in that** partial region of the region of the hollow chamber (5) forming the downstream end face when the valve (2) is open, which, relative to the cross-section of the flow channel (1) and when viewed in the direction of flow (16), lies after the lowest point T on the contour profile of the hollow chamber (5) when the valve (2) is open.

4. The valve (2) according to any one of the preceding claims, **characterised in that** at least one hollow chamber (4, 5) extends over the full width and/or full length of the valve (2).

5. The valve (2) according to any one of the preceding claims, **characterised in that** the hollow chambers (4, 5) are interconnected, preferably along their edges, either directly or indirectly, by a wall section (7).

6. The valve (2) according to any one of the preceding claims, **characterised in that** the hollow chambers (4, 5) have a common partition wall formed in particular by the valve (2).

7. The valve (2) according to any one of the preceding claims, **characterised in that** each measurement point is connected to a transmitter (11), and in particular all measurement points are connected to a common transmitter (11).

8. The valve (2) according to the preceding claim, **characterised in that** the transmitter (11) is arranged in the region of the valve (2), and in particular on the valve (2).

9. The valve (2) of any one of claims 7 or 8, **characterised in that** the transmitter (11) is connected to a regulator device.

10. The valve (2) according to the preceding claim, **characterised in that** the regulator device is arranged in the region of the valve (2), and in particular on the valve (2).

11. The valve (2) according to any one of the preceding claims, **characterised in that** a drive (12) is arranged in the region of the valve (2), and in particular on the valve (2).

12. The valve (2) according to any one of the preceding claims, **characterised in that** the pivoting spindle (3) is configured as a hollow spindle.

13. The valve (2) according to the preceding claim, **characterised in that** the hollow spindle is configured to feed through at least one pressure line (9, 10) or itself forms the pressure line (9, 10).

14. The valve (2) according to one of claims 12 or 13, **characterised in that** the hollow spindle is configured to feed through at least one flow line (13, 14) or itself forms the flow line (13, 14).

15. The valve (2) according to one of 9 or 10, or one of claims 11-14, provided the latter claims refer back to claims 9 or 10, **characterised in that** a protractor connected to the regulator device is provided in order to determine the volume flow rate as a function of the angular position of the valve (2).

16. The valve (2) according to any one of the preceding claims, **characterised in that** at least one recess (6) is round or configured as a slit.

17. The valve (2) according to any one of the preceding claims, **characterised in that** the two hollow chambers (4, 5) are configured mirror-symmetrically.

18. The valve (2) according to any one of the preceding claims, **characterised in that** the height of at least one hollow chamber (4, 5) is constant along its length and/or its width.

19. The valve (2) according to any one of the preceding claims, **characterised in that** the surface profile of the hollow chamber (4) which is upstream when the valve (2) is closed, when the valve (2) is open initially comprises, when viewed in the direction of flow (16), a profile equivalent to a convex curvature and subsequently comprises a profile equivalent to a concave curvature, and/or wherein the surface profile of the hollow chamber (5) which is downstream when the valve (2) is closed, when the valve (2) is open initially comprises, when viewed in the direction of flow (16), a profile equivalent to a concave curvature and subsequently comprises a profile equivalent to a convex curvature.

20. The valve (2) according to any one of the preceding claims, **characterised in that** the height of at least one hollow chamber (4, 5) decreases along its length and/or its width from the centre of the valve (2) to the respective edge.

21. The valve (2) according to any one of the preceding claims, **characterised in that** at least one sensor, and in particular a sensor configured as an air quality sensor (23) and/or a temperature sensor (22), is arranged in the region of at least one hollow chamber (4, 5), preferably in the region of the upstream hollow chamber (4).

22. The valve (2) according to any one of the preceding claims, **characterised in that** at least one flow obstacle (24, 25) comprises an equal, preferably greater, width when viewed orthogonally to the direction of flow (16) than the width of the recess (6) associated with this flow obstacle (24, 25).

## Revendications

1. Volet (2) à disposer dans un canal d'écoulement (1) d'une installation de climatisation, sachant que le volet (2) présente deux faces de volet et est monté à rotation autour d'un axe de pivotement et sachant qu'il est prévu un dispositif avec deux points de mesure pour déterminer le débit volumique d'un fluide gazeux s'écoulant dans le canal d'écoulement, sachant que le volet (2) présente sur chacune de ces deux faces de volet un compartiment creux (4, 5), **caractérisé en ce que** chaque compartiment creux (4, 5) est pourvu d'une pluralité d'évidements (6) réalisés à la manière d'une perforation, sachant que l'un des points de mesure est relié à l'un des compartiments creux (4 ou 5) et que l'autre point de mesure est relié à l'autre compartiment creux (5 ou 4), et **en ce que**
a) un obstacle à l'écoulement (24) est disposé, considéré dans la direction d'écoulement (16), après au moins un évidement (6) qui se trouve, dans la position fermée du volet (2), dans le compartiment creux (4) situé du côté du flux entrant,
a1) la largeur d'au moins un obstacle à l'écoulement (24) diminuant préférentiellement, considéré dans la direction d'écoulement (16),
et/ou
a2) la hauteur d'au moins un obstacle à l'écoulement (24) diminuant préférentiellement, considéré dans la direction d'écoulement (16)
et/ou
b) un obstacle à l'écoulement (25) est disposé, considéré dans la direction d'écoulement (16), avant au moins un évidement (6) qui se trouve, dans la position fermée du volet (2), dans le compartiment creux (5) situé du côté du flux sortant,
b1) la largeur d'au moins un obstacle à l'écoulement (25) augmentant préférentiellement, considéré dans la direction d'écoulement (16),
et/ou
b2) la hauteur d'au moins un obstacle à l'écoulement (25) augmentant préférentiellement, considéré dans la direction d'écoulement (16).

2. Volet (2) selon la revendication précédente, **caractérisé en ce qu'**au moins un des évidements (6), qui se trouve dans la position fermée du volet (2) dans le compartiment creux (4) situé du côté du flux entrant, est disposé dans la région du compartiment creux (4) qui forme la face frontale située du côté du flux entrant dans la position ouverte du volet (2), et/ou **en ce qu'**au moins un des évidements (6), qui se trouve dans la position fermée du volet (2) dans le compartiment creux (5) situé du côté du flux sortant, est disposé dans la région du compartiment creux (5) qui forme la face frontale située du côté du flux sortant dans la position ouverte du volet (2).

3. Volet (2) selon l'une des revendications précédentes, **caractérisé en ce que** tous les évidements (6), qui se trouvent dans la position fermée du volet (2) dans le compartiment creux (4) situé du côté du flux entrant, sont disposés dans la région partielle - de la région du compartiment creux (4) qui forme la face frontale située du côté du flux entrant dans la position ouverte du volet (2) - qui se trouve, considéré dans la direction d'écoulement (16) relativement à la section du canal d'écoulement (1), avant le point le plus haut (P) de l'allure du contour du compartiment creux (4) dans la position ouverte du volet (2), et/ou tous les évidements (6), qui se trouvent dans la position fermée du volet (2) dans le compartiment creux (5) situé du côté du flux sortant, sont disposés dans la région partielle - de la région du compartiment creux (5) qui forme la face frontale située du côté du flux sortant dans la position ouverte du volet (2) - qui se trouve, considéré dans la direction d'écoulement (16) relativement à la section du canal d'écoulement (1), après le point le plus bas (T) de l'allure du contour du compartiment creux (5) dans la position ouverte du volet (2).

4. Volet (2) selon l'une des revendications précédentes, **caractérisé en ce qu'**au moins un compartiment creux (4, 5) s'étend sur toute la largeur et/ou toute la longueur du volet (2).

5. Volet (2) selon l'une des revendications précédentes, **caractérisé en ce que** les compartiments creux (4, 5) sont, de préférence sur leur bord, reliés entre eux soit directement, soit indirectement par l'intermédiaire d'une portion de paroi (7).

6. Volet (2) selon l'une des revendications précédentes, **caractérisé en ce que** les compartiments creux (4, 5) possèdent une paroi de séparation commune, formée notamment par le volet (2).

7. Volet (2) selon l'une des revendications précédentes, **caractérisé en ce que** chaque point de mesure est relié à un transmetteur (11), en particulier tous les points de mesure sont reliés à un transmetteur commun (11).

8. Volet (2) selon la revendication précédente, **caractérisé en ce que** le transmetteur (11) est disposé dans la région du volet (2), en particulier sur le volet (2).

9. Volet (2) selon l'une des revendications 7 ou 8, **caractérisé en ce que** le transmetteur (11) est relié à un régulateur.

10. Volet (2) selon la revendication précédente, **caractérisé en ce que** le régulateur est disposé dans la région du volet (2), en particulier sur le volet (2).

11. Volet (2) selon l'une des revendications précédentes, **caractérisé en ce qu'**un entraînement (12) est disposé dans la région du volet (2), en particulier sur le volet (2).

12. Volet (2) selon l'une des revendications précédentes, **caractérisé en ce que** l'axe de pivotement (3) est réalisé sous la forme d'un arbre creux.

13. Volet (2) selon la revendication précédente, **caractérisé en ce que** l'arbre creux est conçu pour le passage d'au moins une conduite de pression (9, 10), ou forme lui-même la conduite de pression (9, 10).

14. Volet (2) selon l'une des revendications 12 ou 13, **caractérisé en ce que** l'arbre creux est conçu pour le passage d'au moins une ligne électrique (13, 14), ou forme lui-même la ligne électrique (13, 14).

15. Volet (2) selon l'une des revendications 9 ou 10, ou selon l'une des revendications 11 à 14 dans la mesure où ces revendications se réfèrent à la revendication 9 ou 10, **caractérisé en ce qu'**il est prévu un goniomètre relié au régulateur, afin de déterminer le débit volumique en fonction de la position angulaire du volet (2).

16. Volet (2) selon l'une des revendications précédentes, **caractérisé en ce qu'**au moins un évidement (6) est réalisé rond ou sous la forme d'une fente.

17. Volet (2) selon l'une des revendications précédentes, **caractérisé en ce que** les deux compartiments creux (4, 5) sont réalisés symétriques.

18. Volet (2) selon l'une des revendications précédentes, **caractérisé en ce que** la hauteur d'au moins un compartiment creux (4, 5) est constante le long de sa longueur et/ou de sa largeur.

19. Volet (2) selon l'une des revendications précédentes, **caractérisé en ce que** l'allure de surface du compartiment creux (4), situé du côté du flux entrant dans la position fermée du volet (2), présente dans la position ouverte du volet (2), considéré dans la direction d'écoulement (16), d'abord une allure correspondant à une courbure convexe puis une allure correspondant à une courbure concave, et/ou l'allure de surface du compartiment creux (5), situé du côté du flux sortant dans la position fermée du volet (2), présente dans la position ouverte du volet (2), considéré dans la direction d'écoulement (16), d'abord une allure correspondant à une courbure concave puis une allure correspondant à une courbure convexe.

20. Volet (2) selon l'une des revendications précédentes, **caractérisé en ce que** la hauteur d'au moins un compartiment creux (4, 5), le long de sa longueur et/ou de sa largeur, diminue depuis le milieu du volet (2) en direction du bord respectif.

21. Volet (2) selon l'une des revendications précédentes, **caractérisé en ce qu'**au moins un capteur, en particulier un capteur réalisé sous forme de sonde (23) de qualité de l'air et/ou un capteur de température (22), est disposé dans la région d'au moins un compartiment creux (4, 5), de préférence dans la région du compartiment creux (4) situé du côté du flux entrant.

22. Volet (2) selon l'une des revendications précédentes, **caractérisé en ce qu'**au moins un obstacle à l'écoulement (24, 25) présente, considéré orthogonalement à la direction d'écoulement (16), une largeur égale et de préférence supérieure à la largeur de l'évidement (6) associé à cet obstacle à l'écoulement (24, 25).
